# EUROPEAN PATENT SPECIFICATION

(11) **EP 3 157 226 B1**
(45) Date of publication and mention of the grant of the patent: **27.06.2018**
(21) Application number: 16193916.0
(22) Date of filing: 14.10.2016
(51) Int. Cl.: H04L 12/26, H04L 29/08, H04L 29/06, H04W 12/12

(54) **METHOD CIRCUITS DEVICES SYSTEMS AND FUNCTIONALLY ASSOCIATED COMPUTER EXECUTABLE CODE FOR DETECTING AND MITIGATING DENIAL OF SERVICE ATTACK DIRECTED ON OR THROUGH A RADIO ACCESS NETWORKS**
VERFAHREN, SCHALTUNGEN, VORRICHTUNGEN, SYSTEME UND FUNKTIONELL ASSOZIIERTER, PER COMPUTER AUSFÜHRBARER CODE ZUR DETEKTION UND SCHWÄCHUNG VON AUF ODER DURCH FUNKZUGANGSNETZWERKE GERICHTETEN DIENSTVERWEIGERUNGSANGRIFFEN
PROCÉDÉ ET SYSTÈMES DE DISPOSITIFS À CIRCUITS ASSOCIÉS ET CODE INFORMATIQUE EXÉCUTABLE ASSOCIÉ FONCTIONNELLEMENT POUR DÉTECTER ET LIMITER UNE ATTAQUE PAR DÉNI DE SERVICE DIRIGÉE SUR DES RÉSEAUX D'ACCÈS RADIO OU VIA CES DERNIERS

(30) Priority: 14.10.2015 US 201562241164 P
(43) Date of publication of application: 19.04.2017
(73) Proprietor: Saguna Networks Ltd., 20692 Yokneam Illit (IL)
(72) Inventor: Frydman, Daniel Nathan, 32447 Haifa (IL); Fite, Lior, 2010400 Zurit (IL)
(74) Representative: Dr. Graf & Partner AG

(56) References cited:
- US-A1- 2006 272 025
- US-A1- 2009 307 485
- US-A1- 2011 314 542
- US-A1- 2013 318 608

## Description

### FIELD OF THE INVENTION

The present invention generally relates to the field of wireless communication. More specifically, the present invention relates to methods, circuits, devices, systems and functionally associated computer executable code for directing and mitigating a denial of service attack on or through a radio access network.

### BACKGROUND

In computing, a denial-of-service (DoS) attack is an attempt to make a machine or network resource unavailable to its intended users, such as to temporarily or indefinitely interrupt or suspend services of a host connected to the Internet. Criminal perpetrators of DoS and DDoS attacks often target sites or services hosted on high-profile web servers such as banks or credit card payment gateways. Damage to networks and businesses utilizing these networks can be very significant.

Denial of service is typically accomplished by flooding the targeted machine or resource with superfluous requests in an attempt to overload systems and prevent some or all legitimate requests from being fulfilled. A distributed denial-of-service (DDoS) is an attack where the attack source is more than one, often thousands of, unique IP addresses. It is analogous to a group of people crowding the entry door or gate to a shop or business, and not letting legitimate parties enter into the shop or business, disrupting normal operations. These types of DDoS attacked are usually achieved by distribution of malware onto computing devices used by unsuspecting users, and hijacking via the malware those devices such that they act as DDoS packet sources and routers at the control of attacker. The scale of DDoS attacks has continued to rise over recent years, even reaching over 600Gbit/s. DDoS attackers have started producing and distributing DDoS malware in the form mobile device applications and have started used mobile devices and their respective radio/wireless access networks to facilitate DDoS attacked.

DDoS attacks may include:
a. DNS attacks, where the attacker floods the network with DNS requests, faster than the receiving party can process, thus causing it to become unresponsive to normal traffic;
b. SYN attacks, where the attacker floods the network with requests/connections, faster than the receiving party can process, thus causing it to become unresponsive to normal traffic;
c. Simple Service Discovery Protocol (SSDP) attacks, where the attacker floods the network with SSDP messages and causes the receiving party to malfunction;
d. TCP/UDP/Traffic attack, where the attacker floods the network with TCP/UDP traffic and causes the receiving party to malfunction; and
e. Application attack, where the attacker floods the network with HTTP traffic and causes the receiving party to malfunction.

There is a trend of ongoing growth in web attacks in general, and more specifically in attacks and through mobile radio access networks, and it is becoming more crucial to develop solutions that enable detecting and mitigating these attacks prior to damage that may be caused to the network.

Document US2011/0314542A1 discloses a method of remotely treating malicious mobile terminals connected to a mobile communications network. When a malicious mobile terminal is detected by the intrusion-detection services of the network, the network changes the subscriber profile associated with the mobile terminal to operate the latter in a quarantine mode. Document US2013/0318608A1 discloses a technique of isolating an infected mobile terminal, the disclosed embodiment relates to an apparatus for detecting and controlling an infected mobile terminal, in which the infected mobile terminal is detected from a communication network associated with a mobile communication network. Accordingly, there is still a need for improved methods, circuits, devices, systems and functionally associated computer executed code for mitigating DDoS attacks performed on and through radio access networks.

### SUMMARY OF INVENTION

The present invention may include methods, circuits, devices, systems and functionally associated computer executable code for directing and mitigating a denial of service attack on or through a radio access network. According to some embodiments, there may be provided a Malicious Packet Detector (MPD) at or in communicatively proximity with a wireless/radio access node of a wireless radio access network and adapted to detect malicious packets and/or malicious packet flows/streams from a communication device communicatively coupled to the wireless access node and intended to cause a degradation in functionality of one or more network resources of the radio access network itself or of another network to which the radio access network may transmit packets. The MPD may also include packet flow routing and/or filtering functionality to block, mitigate, hinder or otherwise disrupt malicious packet flow from one or more devices found to be transmitting malicious packets. The MPD may also include a controller, an access point signaling module to signal an access point to deallocate bandwidth or otherwise hinder packet flow from a device found to be transmitting malicious packets, and a signaling/reporting unit to report to a network management unit device(s) found to be transmitting malicious packets.

Embodiments of the present invention address detection and disruption of malicious packets associated with Distributed Denial-of-Service (DDoS) attacks launched using mobile communication devices communicatively coupled to access points of a wireless radio access network such a cellular network or a network of Wi-Fi access points. According to embodiment of the present invention, invention advanced methods for detecting and mitigating these attacks from within the radio access network are provided, thus enabling early detection and prevention of damage or disruption of network resources, or of resources on interconnected networks, prior to the occurrence of significant disruption to service. Embodiments of the present invention include methods to detect and disrupt different types of DDoS attacks as close as possible to the source of the one or more attacking communication devices or User Equipment (EU). So as to minimize detection time, and to mitigate possible network resource damage or network service disruptions, some embodiments of the present invention include packet inspection circuits and capability integral with, in communicative proximity, or otherwise functionally associated with radio access circuits or a network access segment of a Wireless and/or Radio Access Network.

The present invention includes methods and devices to detect and mitigate DDoS attacks stemming from devices connected to a mobile cellular network from within the RAN of the network. Different types of DDoS attacks occurring inside a mobile network may be detected and mitigated in accordance with various embodiments of the present invention using network control elements, such as a MPD, unit located in or in proximity with the RAN. DDoS attack types which may be detected and mitigated from inside the RAN portion of the mobile network may include: (a) DNS attacks; (b) SYN attacks; (c) Simple Service Discovery Protocol (SSDP) attacks; (d) TCP/UDP/Traffic attack; and € Application attacks.

According to some embodiments of the present invention, a network element may perform packet traffic steering towards a DDoS attack detection and mitigation block (e.g. MPD).

The DDoS attack detection and mitigation block may detect and mitigates various different DDoS attacks by analyzing and handling packet traffic as follows:
a. DNS attack detection and mitigation - detect DNS traffic above normal coming from a UE/s towards a specific DNS server/s, alert and block the specific UE/s;
b. SYN attack detection and mitigation - detect SYN requests activity above normal coming from a UE/s towards a specific DNS server/s, alert and block the specific UE/s;
c. Simple Service Discovery Protocol (SSDP) attack detection and mitigation - detect these messages are being sent in a high rate by a UE/s towards a specific DNS server/s, alert and block the specific UE/s;
d. TCP/UDP/Traffic attack detection and mitigation - detect above average short TCP connections coming from a UE towards a specific server/s, alert and block the specific UE/s; and
e. Application attack detection and mitigation - detect above average HTTP POST traffic coming from a UE towards a specific server/s, alert and block the specific UE/s.

According to some embodiments, there may be provided a radio access network comprising including one or more radio access points to wirelessly engage in communication with one or more wireless communication devices. The access points may include wireless communication circuits including Radio Frequency transceivers and a wireless communication controller to provide and manage radio access to wireless/radio communication devices. The network may also include a Malicious Packet Detector (MPD) communicatively coupled to one or more radio access points and configured to detect one or more malicious packets, such as DDoS packets, transmitted to the radio access network by the one or more wireless communication devices. A controller functionally associated with the MPD may be configured to alter network operation so as to mitigate and/or disrupt malicious packet flow from the one or more malicious packet transmitting wireless communication devices.

The MPD may detect whether a packet is a malicious packet by inspecting at least one characteristics of the packet to assess whether the packet is part of a denial of service attack on a data network resource. The MPD may detect whether a packet is part of a malicious packet flow by inspecting at least one characteristic of a set of packets addressed to a common or related data network resource. A network resource protected by the MPD may be selected from the group consisting of: (a) a Domain Name Server, (b) a digital content or media server, and (c) an application engine or server. At least one characteristic of the set of packets may be selected from the group consisting of: (a) destination address, (b) source address, (c) duration between consecutive packets, (d) patterns of packet transmissions from a given device, and (e) a correlation between packets being transmitted to a common destination address substantially concurrently by separate devices.

According to embodiments, mitigating malicious packet flow may include redirecting or terminating packets detected to be part of a malicious packet flow. Mitigating malicious packet flow may include altering a radio link of a device which is transmitting a malicious packet flow to the radio access network. Altering a radio link of the device which is transmitting the malicious packet flow includes signaling a radio access point with which the device is communicatively coupled to deallocate or otherwise restrict bandwidth to the device.

Mitigating a malicious packet flow may include reporting detection of the malicious packet flow to a network control unit, wherein reporting may include reporting an identifier of a device transmitting the malicious packet flow.

### BRIEF DESCRIPTION OF THE FIGURES

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 shows a symbolic block network diagram of a wireless radio access network according to embodiments of the present invention including a malicious packet detector and filter unit coupled to each of two network access points and operating to inspect and filter malicious packets being transmitted to the network by devices communicatively coupled to a respective access point;
Fig. 2 shows a functional block diagram of an exemplary malicious packet detector and filter unit according to embodiments including: a packet inspector, a packet pattern detector, a packet routing module and signaling modules for the radio access circuits and for the network management units;
Fig. 3 shows a flowchart including the steps of a method by which an MPD according to embodiments of the present invention may detect and mitigate negative impact of malicious packets transmitted by devices communicatively coupled to a network access point serviced or otherwise cover by the MPD;
Fig. 4A is a packet flow diagram illustrating an exemplary malicious packet flow interception according to embodiments of the present invention;
Fig. 4B is a packet flow diagram illustrating an exemplary malicious packet flow interception according to embodiments of the present invention;
Fig. 4C is a packet flow diagram illustrating an exemplary malicious packet flow interception according to embodiments of the present invention; and
Fig. 5 shows a network diagram of a cellular radio access network with multiple access zones and an MPD according to embodiments of the present invention, wherein the MPD is servicing or otherwise providing coverage to one of the network's access zones in order to mitigate negative impact on network resources by malicious packets transmitted by devices connected to the network through access points within the network access zone.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE FIGURES

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, may refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In addition, throughout the specification discussions utilizing terms such as "storing", "hosting", "caching", "saving", or the like, may refer to the action and/or processes of 'writing' and 'keeping' digital information on a computer or computing system, or similar electronic computing device, and may be interchangeably used. The term "plurality" may be used throughout the specification to describe two or more components, devices, elements, parameters and the like.

Some embodiments of the invention, for example, may take the form of an entirely hardware embodiment, an entirely software embodiment, or an embodiment including both hardware and software elements. Some embodiments may be implemented in software, which includes but is not limited to firmware, resident software, microcode, or the like.

Furthermore, some embodiments of the invention may take the form of a computer program product accessible from a computer-usable or computer-readable medium providing program code for use by or in connection with a computer or any instruction execution system. For example, a computer-usable or computer-readable medium may be or may include any apparatus that can contain, store, communicate, propagate, or transport the program for use by or in connection with the instruction execution system, apparatus, or device.

In some embodiments, the medium may be an electronic, magnetic, optical, electromagnetic, infrared, or semiconductor system (or apparatus or device) or a propagation medium. Some demonstrative examples of a computer-readable medium may include a semiconductor or solid state memory, magnetic tape, a removable computer diskette, a random access memory (RAM), a read-only memory (ROM), any composition and/or architecture of semiconductor based Non-Volatile Memory (NVM), any composition and/or architecture of biologically based Non-Volatile Memory (NVM), a rigid magnetic disk, and an optical disk. Some demonstrative examples of optical disks include compact disk - read only memory (CD-ROM), compact disk - read/write (CD-R/W), and DVD.

In some embodiments, a data processing system suitable for storing and/or executing program code may include at least one processor coupled directly or indirectly to memory elements, for example, through a system bus. The memory elements may include, for example, local memory employed during actual execution of the program code, bulk storage, and cache memories which may provide temporary storage of at least some program code in order to reduce the number of times code must be retrieved from bulk storage during execution.

In some embodiments, input/output or I/O devices (including but not limited to keyboards, displays, pointing devices, etc.) may be coupled to the system either directly or through intervening I/O controllers. In some embodiments, network adapters may be coupled to the system to enable the data processing system to become coupled to other data processing systems or remote printers or storage devices, for example, through intervening private or public networks. In some embodiments, modems, cable modems and Ethernet cards are demonstrative examples of types of network adapters. Other functionally suitable components may be used.

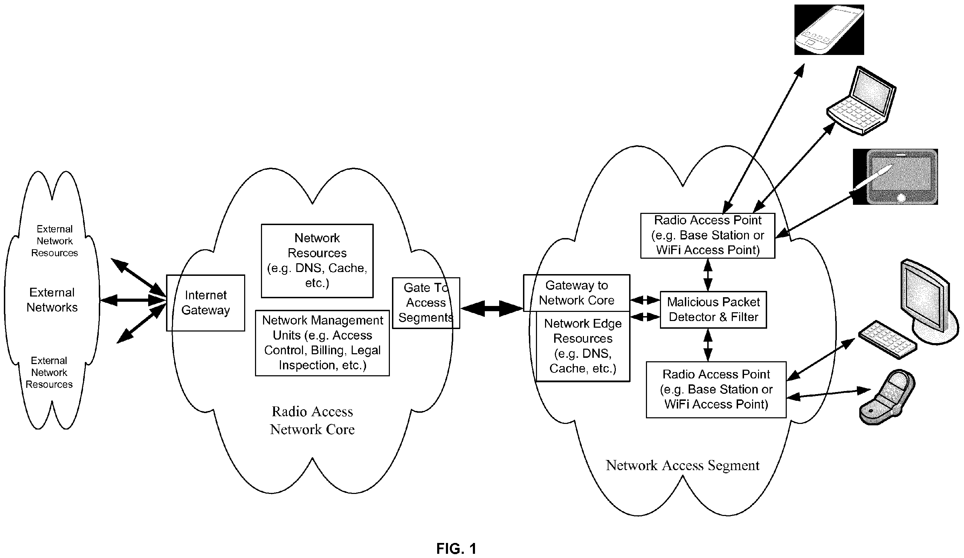

Turning now to Fig. 1, there is shown a symbolic block network diagram of a wireless radio access network according to embodiments of the present invention including a malicious packet detector and filter unit coupled to each of two network access points and operating to inspect and filter malicious packets being transmitted to the network by devices communicatively coupled to a respective access point. The unit may be comprised of a single network appliance, a part of one or more network appliance of multiple network appliances working in concert.

The MPD may operate inside of a RAN, a flat IP environment, an IP tunnel or any other data environment found within a cellular communication network. The MPD may include one or more packet inspectors, including a deep packet inspector. The MPD may include an IP tunnel sniffer or the like.

The MPD shown of Fig. 1 may detected and mitigate negative impact of malicious packets transmitted by communication device connected to the network upon network performance and on network resources, both inside and outside the network. The MPD is configured to detect and filter out malicious packets, such as DDoS packets, targeting network resources on the network access segment, at the network core and/or external resources outside the network.

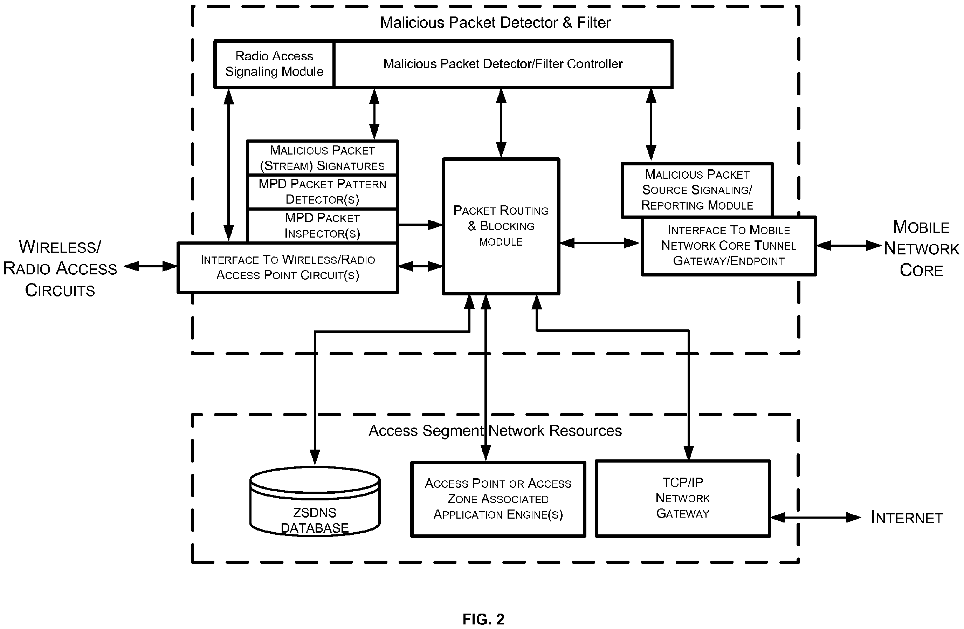

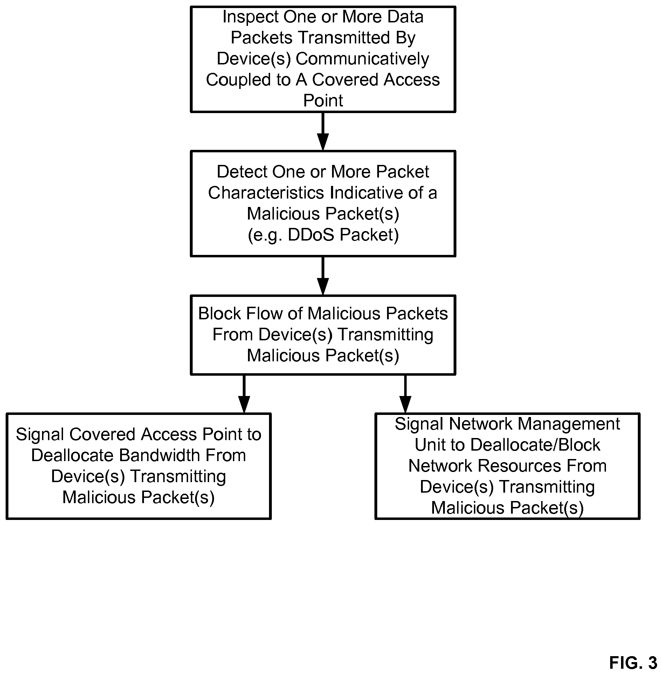

Turning now to Fig. 2, there is shown a functional block diagram of an exemplary malicious packet detector and filter unit according to embodiments including: a packet inspector, a packet pattern detector, a packet routing module and signaling modules for a radio access (RF) circuits and for the network management units. Also shown are network resources which may be protected by the MPD. The functional elements and operation of the MPD may be described in conjunction with the steps illustrated in Fig. 3, which figure shows a flowchart including the steps of a method by which an MPD according to embodiments of the present invention may detect and mitigate negative impact of malicious packets transmitted by devices communicatively coupled to a network access point serviced or otherwise cover by the MPD.

Packets received by the network from communication devices via wireless radio circuits of the network may be received by the MPD over an interface to the radio circuits. Individual packets may be inspected by a packet inspector and a packet pattern detector may detect packet patterns indicative of a DDoS attach. A library of packet signatures, packet patterns or packet flow/stream behaviors may be used by the packet inspector and/or the packet the packet pattern detector.

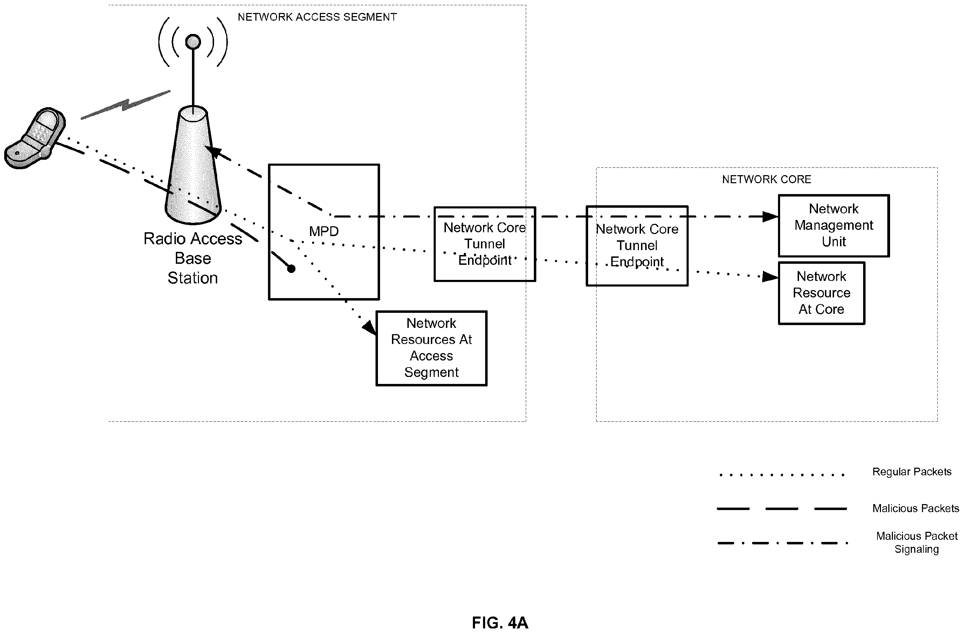

Packets not found to be malicious are routed by the MPD routing module to their respective target network resources destination, as shown in Fig. 4A, which is a packet flow diagram illustrating an exemplary selective malicious packet flow interception, while allowing normal packets to pass, according to embodiments of the present invention. Packets found to be malicious, for example being part of a DDoS attack may be terminated at the MPD. Furthermore, signaling by the MPD, through a radio access signaling module, may cause the radio circuits through which malicious packets were received to reallocate, limit or otherwise disrupt bandwidth or connectivity to the communication device(s) which transmitted the malicious packet(s). A Malicious packet source reporting module may also report the source of detected malicious packets to a network management unit, such as a network access controller, optionally causing the network management unit to cause the network to disconnect from the communication device(s) which transmitted the malicious packet(s).

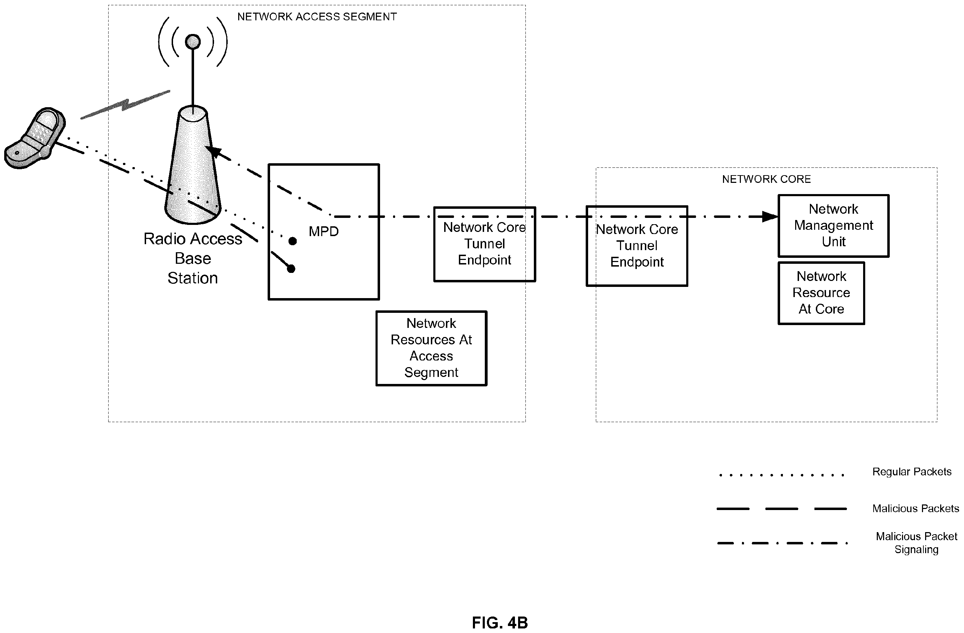

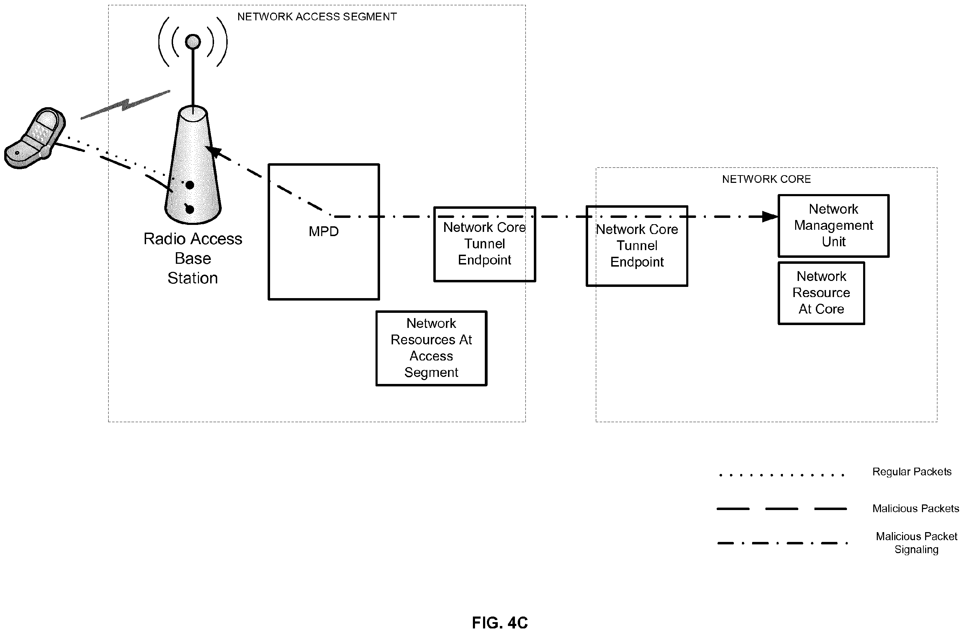

Turning now to Fig. 4B, there is shown a packet flow diagram illustrating an exemplary malicious packet flow interception according to embodiments of the present invention wherein all packets from a malicious packet source device are terminated at the MPD. Fig. 4C is a packet flow diagram illustrating an exemplary malicious packet flow interception according to embodiments of the present invention where all packets from malicious packet source device are terminated at or before the radio access circuits. The flow of Fig. 4C may occur when either the radio circuits or the network management unit disconnect or otherwise restrict access of communication devices which were found to transmit malicious packets to the network.

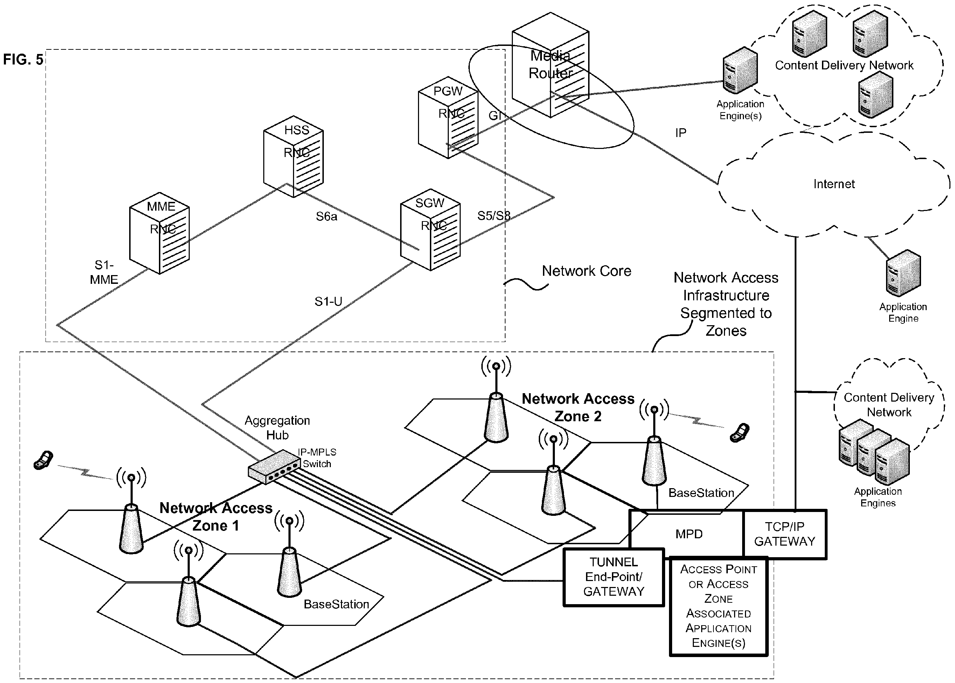

Turning now to Fig. 5, there is shown a network diagram of a wireless radio access cellular network with multiple access zones and an MPD according to embodiments of the present invention, wherein the MPD is servicing or otherwise providing coverage to one of the network's access zones in order to mitigate negative impact on network resources by malicious packets transmitted by devices connected to the network through access points within the network access

Functions, operations, components and/or features described herein with reference to one or more embodiments, may be combined or otherwise utilized with one or more other functions, operations, components and/or features described herein with reference to one or more other embodiments, or vice versa. While certain features of the invention have been illustrated and described herein, many modifications, substitutions, changes, and equivalents will now occur to those skilled in the art. It is, therefore, to be understood that the appended claims are intended to cover all such modifications and changes as fall within the scope of the invention.

## Claims

1. A radio access network comprising:
a one or more radio access points to wirelessly engage in communication with one or more wireless communication devices;
a Malicious Packet Detector (MPD) communicatively coupled to one or more radio access points and configured to detect one or more malicious packets transmitted to said radio access network by the one or more wireless communication devices; and
a controller functionally associated with the MPD to alter network configuration so as to mitigate malicious packet flow from the one or more malicious packet transmitting wireless communication devices, wherein said MPD detects whether a packet is a malicious packet by inspecting at least one characteristics of the packet to assess whether the packet is part of a denial of service attack on a data network resource, wherein said MPD detects whether a packet is part of a malicious packet flow by inspecting at least one characteristic of a set of packets addressed to a common or related data network resource, and wherein the at least one characteristic of the set of packets is selected from the group consisting of: (a) destination address, (b) source address, (c) duration between consecutive packets, (d) patterns of packet transmissions from a given device, and (e) a correlation between packets being transmitted to a common destination address substantially concurrently by separate devices.

2. The radio access network according to claim 1, wherein mitigating malicious packet flow includes redirecting or terminating packets detected to be part of a malicious packet flow.

3. The radio access network according to claim 1, wherein mitigating malicious packet flow includes altering a radio link of a device which is transmitting a malicious packet flow to said radio access network, and wherein altering a radio link of the device which is transmitting the malicious packet flow includes signaling a radio access point with which the device is communicatively coupled to deallocate or otherwise restrict bandwidth to the device.

4. The radio access network according to claim 1, wherein mitigating a malicious packet flow includes reporting detection of the malicious packet flow to a network control unit, wherein reporting includes reporting an identifier of a device transmitting the malicious packet flow.

5. A method of mitigating an impact of malicious packets on a radio access network with one or more radio access points wirelessly engaged in communication with one or more wireless communication devices, wherein said method comprises:
detecting one or more malicious packets transmitted to said radio access network by the one or more wireless communication devices; and
altering radio access network configure so as to disrupt malicious packet flow from the one or more malicious packet transmitting wireless communication devices, wherein detection that a packet is a malicious packet includes inspecting at least one characteristics of the packet to assess whether the packet is part of a denial of service attack on a data network resource, wherein detection of whether a packet is part of a malicious packet flow includes inspecting at least one characteristic of a set of packets addressed to a common or related data network resource, and wherein the at least one characteristic of the set of packets is selected from the group consisting of: (a) destination address, (b) source address, (c) duration between consecutive packets, (d) patterns of packet transmissions from a given device, and (e) a correlation between packets being transmitted to a common destination address substantially concurrently by separate devices.

6. The method according to claim 5, wherein the data network resource is selected from the group consisting of: (a) a Domain Name Server, (b) a digital content or media server, and (c) an application engine or server.

7. The method according to claim 5, wherein disrupting malicious packet flow includes redirecting or terminating packets detected to be part of a malicious packet flow.

8. The method according to claim 5, wherein mitigating malicious packet flow includes altering a radio link of a device which is transmitting a malicious packet flow to said radio access network, and wherein altering a radio link of the device which is transmitting the malicious packet flow includes signaling a radio access point with which the device is communicatively coupled to deallocate or otherwise restrict bandwidth to the device.

9. The method according to claim 5, wherein disrupting a malicious packet flow includes reporting detection of the malicious packet flow to a network management unit, wherein reporting includes reporting an identifier of a device transmitting the malicious packet flow.

## Patentansprüche

1. Funkzugriffsnetzwerk, das Folgendes umfasst:
einen oder mehrere Funkzugriffspunkte zum drahtlosen Aufbauen einer Kommunikation mit einer oder mehreren drahtlosen Kommunikationsvorrichtungen;
eine Einrichtung zur Erkennung schädlicher Pakete (Malicious Packet Detector, MPD), die kommunikativ mit einem oder mehreren Funkzugriffspunkten gekoppelt und konfiguriert ist, ein oder mehrere durch die eine oder die mehreren drahtlosen Kommunikationsvorrichtungen zu dem Funkzugriffsnetzwerk übertragene schädliche Pakete zu erkennen; und
eine Steuerung, die funktional der Einrichtung zur Erkennung schädlicher Pakete zugeordnet ist, um eine Netzwerkkonfiguration derart zu ändern, dass ein Strom von schädlichen Paketen von der einen oder den mehreren schädliche Pakete übertragenden drahtlosen Kommunikationsvorrichtungen zu begrenzen, wobei die Einrichtung zur Erkennung schädlicher Pakete erkennt, ob ein Paket ein schädliches Paket ist, durch Prüfen mindestens einer Eigenschaft des Paketes, um zu beurteilen, ob das Paket Teil eines Dienstverweigerungsangriffs (Denial of Service, DoS) auf eine Datennetzwerkressource ist, wobei die Einrichtung zur Erkennung schädlicher Pakete erkennt, ob ein Paket Teil eines Stroms von schädlichen Paketen ist, durch Prüfen mindestens einer Eigenschaft eines Satzes von Paketen, die an eine gemeinsame oder zugehörige Datennetzwerkressource adressiert sind, und wobei die mindestens eine Eigenschaft des Satzes von Paketen aus der Gruppe ausgewählt ist, die aus Folgendem besteht: (a) Zieladresse, (b) Quelladresse, (c) Dauer zwischen aufeinanderfolgenden Paketen, (d) Muster einer Paketübertragung von einer gegebenen Vorrichtung und (e) eine Korrelation zwischen Paketen, die im Wesentlichen gleichzeitig von unterschiedlichen Vorrichtungen an eine gemeinsame Zieladresse übertragen werden.

2. Funkzugriffsnetzwerk nach Anspruch 1, wobei das Begrenzen eines Stroms von schädlichen Paketen ein Umleiten oder Beenden von Paketen umfasst, die als ein Teil eines Stroms von schädlichen Paketen erkannt werden.

3. Funkzugriffsnetzwerk nach Anspruch 1, wobei das Begrenzen eines Stroms von schädlichen Paketen ein Ändern einer Funkverbindung einer Vorrichtung umfasst, die einen Strom von schädlichen Paketen zu dem Funkzugriffsnetzwerk überträgt, und wobei das Ändern einer Funkverbindung der Vorrichtung, die den Strom von schädlichen Paketen überträgt, ein Signalisieren eines Funkzugriffspunkts umfasst, mit dem die Vorrichtung kommunikativ gekoppelt ist, um die Bandbreite zu der Vorrichtung neu zuzuweisen oder anderweitig einzuschränken.

4. Funkzugriffsnetzwerk nach Anspruch 1, wobei das Begrenzen eines Stroms von schädlichen Paketen ein Berichten der Erkennung des Stroms von schädlichen Paketen an eine Netzwerksteuereinheit umfasst, wobei das Berichten ein Berichten einer Kennung einer Vorrichtung umfasst, die den Strom von schädlichen Paketen überträgt.

5. Verfahren zum Begrenzen einer Auswirkung schädlicher Pakete auf ein Funkzugriffsnetzwerk mit einem oder mehreren Funkzugriffspunkten zum drahtlosen Aufbauen einer Kommunikation mit einer oder mehreren drahtlosen Kommunikationsvorrichtungen, wobei das Verfahren Folgendes umfasst:
Erkennen eines oder mehrerer durch die eine oder die mehreren drahtlosen Kommunikationsvorrichtungen zu dem Funkzugriffsnetzwerk übertragener schädlicher Pakete; und
Ändern einer Funkzugriffsnetzwerkkonfiguration derart, dass ein Strom von schädlichen Paketen von der einen oder den mehreren schädliche Pakete übertragenden drahtlosen Kommunikationsvorrichtungen unterbrochen wird, wobei ein Erkennen, dass ein Paket ein schädliches Paket ist, ein Prüfen mindestens einer Eigenschaft des Paketes umfasst, um zu beurteilen, ob das Paket Teil eines Dienstverweigerungsangriffs auf einer Datennetzwerkressource ist, wobei das Erkennen, ob ein Paket Teil eines Stroms von schädlichen Paketen ist, ein Prüfen mindestens einer Eigenschaft eines Satzes von Paketen umfasst, die an eine gemeinsame oder zugehörige Datennetzwerkressource adressiert sind, und wobei die mindestens eine Eigenschaft des Satzes von Paketen aus der Gruppe ausgewählt ist, die aus Folgendem besteht: (a) Zieladresse, (b) Quelladresse, (c) Dauer zwischen aufeinanderfolgenden Paketen, (d) Muster von Paketübertragungen von einer gegebenen Vorrichtung und (e) eine Korrelation zwischen Paketen, die im Wesentlichen gleichzeitig von unterschiedlichen Vorrichtungen zu einer gemeinsamen Zieladresse übertragen werden.

6. Verfahren nach Anspruch 5, wobei die Datennetzwerkressource aus der Gruppe ausgewählt ist, die aus Folgendem besteht: (a) ein Domänennamenserver, (b) ein digitaler Inhalts- oder Medienserver und (c) eine Anwendungsengine oder ein Anwendungsserver.

7. Verfahren nach Anspruch 5, wobei das Unterbrechen eines Stroms von schädlichen Paketen ein Umleiten oder Beenden von Paketen umfasst, die als ein Teil eines Stroms von schädlichen Paketen erkannt werden.

8. Verfahren nach Anspruch 5, wobei das Begrenzen eines Stroms von schädlichen Paketen ein Ändern einer Funkverbindung einer Vorrichtung umfasst, die einen Strom von schädlichen Paketen zu dem Funkzugriffsnetzwerk überträgt, und wobei das Ändern einer Funkverbindung der Vorrichtung, die den Strom von schädlichen Paketen überträgt, ein Signalisieren eines Funkzugriffspunkts umfasst, mit dem die Vorrichtung kommunikativ gekoppelt ist, um die Bandbreite zu der Vorrichtung neu zuzuweisen oder anderweitig einzuschränken.

9. Verfahren nach Anspruch 5, wobei das Unterbrechen eines Stroms von schädlichen Paketen ein Berichten der Erkennung des Stroms von schädlichen Paketen an eine Netzwerkverwaltungseinheit umfasst, wobei das Berichten ein Berichten einer Kennung einer Vorrichtung umfasst, die den Strom von schädlichen Paketen überträgt.

## Revendications

1. Réseau d'accès radio comprenant :
un ou plusieurs points d'accès radio pour prendre part sans fil à une communication avec un ou plusieurs dispositifs de communication sans fil ; un détecteur de paquet malveillant (MPD) couplé en communication à un ou plusieurs points d'accès radio et configuré pour détecter un ou plusieurs paquets malveillants transmis audit réseau d'accès radio par le ou les dispositifs de communication sans fil ; et
un dispositif de commande associé de manière fonctionnelle au détecteur MPD pour modifier une configuration de réseau de sorte à atténuer un flux de paquets malveillants en provenance du ou des dispositifs de communication sans fil transmettant des paquets malveillants, dans lequel ledit détecteur MPD détecte si un paquet est un paquet malveillant ou non en vérifiant au moins une caractéristique du paquet pour évaluer si le paquet fait partie ou non d'une attaque de refus de service sur une ressource de réseau de données, dans lequel ledit détecteur MPD détecte si un paquet fait partie ou non d'un flux de paquets malveillants en vérifiant au moins une caractéristique d'un ensemble de paquets adressés à une ressource de réseau de données commune ou associée et dans lequel la ou les caractéristiques de l'ensemble de paquets sont sélectionnées dans le groupe constitué par : (a) l'adresse de destination, (b) l'adresse source, (c) la durée entre des paquets consécutifs, (d) des motifs de transmission de paquet à partir d'un dispositif donné et (e) une corrélation entre des paquets qui sont transmis à une adresse de destination commune sensiblement en même temps par des dispositifs distincts.

2. Réseau d'accès radio selon la revendication 1, dans lequel l'atténuation d'un flux de paquets malveillants consiste à rediriger ou à mettre fin à des paquets détectés comme faisant partie d'un flux de paquets malveillants.

3. Réseau d'accès radio selon la revendication 1, dans lequel l'atténuation d'un flux de paquets malveillants consiste à modifier une liaison radio d'un dispositif qui transmet un flux de paquets malveillants audit réseau d'accès radio et dans lequel la modification d'une liaison radio du dispositif qui transmet le flux de paquets malveillants consiste à signaler un point d'accès radio avec lequel le dispositif est couplé en communication pour désattribuer, ou sinon limiter, une largeur de bande au dispositif.

4. Réseau d'accès radio selon la revendication 1, dans lequel l'atténuation d'un flux de paquets malveillants consiste à rapporter une détection du flux de paquets malveillants à une unité de commande de réseau, dans lequel le rapport consiste à rapporter un identifiant d'un dispositif transmettant le flux de paquets malveillants.

5. Procédé d'atténuation d'un impact de paquets malveillants sur un réseau d'accès radio ayant un ou plusieurs points d'accès radio prenant part sans fil à une communication avec un ou plusieurs dispositifs de communication sans fil, dans lequel ledit procédé consiste :
à détecter un ou plusieurs paquets malveillants transmis audit réseau d'accès radio par le ou les dispositifs de communication sans fil ; et
à modifier une configuration de réseau d'accès radio de sorte à interrompre un flux de paquets malveillants en provenance du ou des dispositifs de communication sans fil transmettant des paquets malveillants, dans lequel la détection indiquant qu'un paquet est un paquet malveillant, consiste à vérifier au moins une caractéristique du paquet pour évaluer si le paquet fait partie ou non d'une attaque de refus de service sur une ressource de réseau de données, dans lequel la détection indiquant si un paquet fait partie ou non d'un flux de paquets malveillants consiste à vérifier au moins une caractéristique d'un ensemble de paquets adressés à une ressource de réseau de données commune ou associée et dans lequel la ou les caractéristiques de l'ensemble de paquets sont sélectionnées dans le groupe constitué par : (a) l'adresse de destination, (b) l'adresse source, (c) la durée entre des paquets consécutifs, (d) des motifs de transmission de paquet à partir d'un dispositif donné et (e) une corrélation entre des paquets qui sont transmis à une adresse de destination commune sensiblement en même temps par des dispositifs distincts.

6. Procédé selon la revendication 5, dans lequel la ressource de réseau de données est sélectionnée dans le groupe constitué par : (a) un serveur de nom de domaine, (b) un contenu numérique ou un serveur multimédia et (c) un moteur, ou un serveur, d'application.

7. Procédé selon la revendication 5, dans lequel l'interruption d'un flux de paquets malveillants consiste à rediriger ou à mettre fin à des paquets détectés comme faisant partie d'un flux de paquets malveillants.

8. Procédé selon la revendication 5, dans lequel l'atténuation d'un flux de paquets malveillants consiste à modifier une liaison radio d'un dispositif qui transmet un flux de paquets malveillants audit réseau d'accès radio et dans lequel la modification d'une liaison radio du dispositif qui transmet le flux de paquets malveillants consiste à signaler un point d'accès radio avec lequel le dispositif est couplé en communication pour désattribuer, ou sinon limiter, une largeur de bande au dispositif.

9. Procédé selon la revendication 5, dans lequel l'interruption d'un flux de paquets malveillants consiste à rapporter une détection du flux de paquets malveillants à une unité de gestion de réseau, dans lequel le rapport consiste à rapporter un identifiant d'un dispositif transmettant le flux de paquets malveillants.
